# FASCICULE DE BREVET EUROPEEN

(11) **EP 1 814 819 B1**
(45) Date de publication et mention de la délivrance du brevet: **28.02.2018**
(21) Numéro de dépôt: 05815561.5
(22) Date de dépôt: 27.10.2005
(51) Int. Cl.: C01B 3/50, C01B 3/56, C01B 32/50, F25J 3/02, F25J 3/06, F25J 3/08, C01B 3/48

(54) **PROCÉDÉ ET INSTALLATION POUR LA PRODUCTION COMBINÉE D'HYDROGENE ET DE DIOXYDE DE CARBONE**
VERFAHREN UND ANLAGE ZUR KOMBINIERTEN HERSTELLUNG VON WASSERSTOFF- UND KOHLENSTOFFDIOXID
METHOD AND INSTALLATION FOR COMBINED PRODUCTION OF HYDROGEN AND CARBON DIOXIDE

(30) Priorité: 16.11.2004 FR 0452645
(43) Date de publication de la demande: 08.08.2007
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: GAUTHIER, Pierre-Robert, F-94260 Fresnes (FR); POLSTER, Bernd, F-94700 Maisons-Alfort (FR); MARTY, Pascal, F-75002 Paris (FR)
(74) Mandataire: Conan, Philippe Claude
(86) Numéro de dépôt international: PCT/FR2005/050907
(87) Numéro de publication internationale: WO 2006/054008

(56) Documents cités:
- WO-A-99/35455
- US-A1- 2003 191 196

## Description

La présente invention concerne un procédé de production combinée d'hydrogène et de dioxyde de carbone à partir d'une source d'hydrocarbures. Plus particulièrement, la présente invention concerne un procédé de production combinée d'hydrogène et de dioxyde de carbone à partir d'un gaz de synthèse obtenu à partir d'hydrocarbures et notamment de gaz naturel, de propane, butane, naphta, gaz de pétrole liquéfié, seuls ou en mélange.

A l'heure actuelle, le dioxyde de carbone (ou CO₂) utilisé à des fins alimentaires, est généralement issu de sources riches, il s'agit notamment de CO₂ naturel prélevé par forage dans des couches géologiques profondes ou de CO₂ coproduit dans des unités de production d'hydrogène par reformage d'hydrocarbures à la vapeur.

Une source très largement utilisée est l'effluent riche en CO₂ (environ 98% en volume sur base sèche), disponible en basse pression, issu de l'unité de décarbonatation intégrée dans la préparation de la charge N₂ + 3H₂ des unités de synthèse d'ammoniac.

Ce CO₂ impur, saturé en eau, est alors comprimé à 35 bar environ, puis purifié par adsorption et/ou destruction catalytique des constituants plus lourds que le CO₂, avant d'être partiellement condensé par voie cryogénique et purifié par distillation des constituants plus légers que le CO₂, pour être stocké sous forme liquide, et enfin transporté sous forme liquide ou gazeuse.

Typiquement, l'unité de décarbonatation met en oeuvre des procédés de lavage, sous une pression comprise entre 15 à 40 bar, à température ambiante ou plus froide, et avec un solvant (de type solution aqueuse d'amines, de carbonate de potassium, méthanol, ...) régénérable en basse pression et à plus haute température.

Cependant, la délocalisation des unités d'ammoniac vers des pays en voie de développement ou dans des zones où les sources d'hydrocarbures sont bon marché conduit à la disparition de ces sources de CO₂ traditionnelles dans certains pays fortement demandeurs d'Europe ou d'Amérique.

Simultanément, dans ces derniers pays, l'industrie du raffinage a un besoin croissant en hydrogène (H₂) pour la désulfuration des carburants. Ceci conduit à la réalisation de grosses unités d'hydrogène, généré par reformage d'hydrocarbures à la vapeur et purifié notamment par adsorption avec un procédé régénératif par modulation de pression (ou PSA).

Le rendement de récupération en hydrogène des unités de purification PSA est voisin de 90%, le gaz résiduaire du PSA (ou gaz de purge du PSA) est, typiquement disponible à une pression inférieure à 2 bar, et contient les 10% d'hydrogène résiduel et toutes les impuretés contenues dans le gaz de synthèse (CH₄, CO, CO₂, N₂, en fonction de la composition de la charge d'hydrocarbures initiale). Afin de le valoriser, ce gaz résiduaire est pour cela envoyé en tant que combustible aux brûleurs du four du reformage à la vapeur.

Pour permettre le contrôle desdits brûleurs il est cependant nécessaire d'importer une certaine quantité de combustible correspondant typiquement à 10 à 15% du besoin global en combustible.

Simultanément, les améliorations apportées au procédé de reformage à la vapeur ont diminué le besoin en combustible des brûleurs en même temps qu'elles augmentaient le pouvoir calorifique du gaz résiduaire issu du PSA. On citera notamment la diminution du ratio Vapeur/Carbone ou V/C (steam/carbon ou S/C en langue anglaise) qui à la fois diminue le besoin en combustible du procédé et augmente la quantité de CH₄ et de CO produits et donc le pouvoir calorifique du gaz résiduaire du PSA. La nécessité de valoriser le gaz résiduaire du PSA à basse pression, devient ainsi un facteur limitant pour l'optimisation du reformage à la vapeur.

Si le reformage à la vapeur est la technique la plus largement utilisée dans le cadre de la production d'hydrogène, on fait cependant aussi appel à d'autres techniques de génération de gaz de synthèse, parmi lesquelles le reformage auto-thermique, l'oxydation partielle catalytique ou non catalytique, cette dernière étant notamment utilisée dans le cadre de l'oxydation de résidus.

Ainsi, on observe simultanément :
- un manque, dans les pays utilisateurs, de sources de dioxyde de carbone conforme à la demande de l'industrie. Ce CO₂ doit pouvoir se présenter sous une forme adaptée à l'usage auquel il est destiné, notamment du CO₂ purifié pour l'industrie alimentaire.
- une limitation du rendement des unités de purification d'hydrogène, liée au rendement du PSA, qui conduit par ailleurs à une limitation de l'optimisation de la génération du gaz de synthèse, notamment du reformage.

L'homme du métier sait produire conjointement de l'hydrogène purifié par PSA, et un flux concentré en dioxyde de carbone en sortie d'unité de décarbonatation (par lavage aux amines par exemple). Le flux concentré en CO₂ est alors comprimé pour pouvoir être purifié. Le résiduaire du PSA est quant à lui valorisé, soit comme combustible sans compression, soit par recyclage vers le procédé amont, avec une compression. La mise en oeuvre de cette solution nécessite de faire appel à deux compresseurs, l'un pour produire le CO₂, l'autre pour comprimer le résiduaire avant de le recycler vers le reformage. Le coût de ces compresseurs, de la décarbonatation et de l'unité PSA, rend cette solution non acceptable économiquement.

WO 99/35455 divulgue un procédé pour l'obtention d'un flux de dioxyde de carbone liquide de qualité alimentaire à partir d'un gaz riche en dioxyde de carbone, pouvant être un résiduaire de PSA en utilisant des étapes de compression du résiduaire, séchage, condensation/séparation pour obtenir en fin de procédé un flux de dioxyde de carbone et un flux riche en hydrogène. Le flux riche en hydrogène ainsi obtenu est recyclé en l'état, pour partie dans le procédé de production d'hydrogène et pour partie renvoyé vers l'atmosphère.

Il existe donc un besoin pour un procédé économiquement viable de production d'hydrogène, purifié par PSA, et de production de dioxyde de carbone tout en assurant la valorisation des gaz combustibles inclus dans le gaz résiduaire issu du PSA.

La solution selon l'invention consiste à utiliser un seul compresseur pour à la fois comprimer le CO₂ à purifier et pour comprimer les autres constituants du résiduaire à recycler. Cette solution économique de valorisation du résiduaire du PSA est intégrée au procédé et présente en outre dans ses différentes variantes les avantages suivants :
- production de CO₂, notamment de qualité alimentaire, mais pouvant être selon les cas du CO₂ de pureté moindre, à utiliser ou stocker localement ou à transporter pour stockage ou utilisation éloignés.
- production d'un gaz de purge, lequel fournira en combustible le reformage, mais pourra aussi être valorisé partiellement comme :
   - gaz de charge pour le reformage, et/ou
   - gaz de charge du PSA.

C'est pourquoi l'invention a pour objet un procédé pour la production combinée d'hydrogène et de dioxyde de carbone à partir d'un mélange d'hydrocarbures tel que défini à la revendication 1.

Sans étape de décarbonatation, mais avec étape de conversion inverse, le résidu du PSA contient une quantité de CO₂ de l'ordre de 45% provenant du reformage et de la conversion inverse (la teneur exacte en CO₂ étant naturellement fonction de la composition du mélange d'hydrocarbures initial). Le procédé permet alors, partant du gaz résiduaire du PSA, dont la pression est typiquement inférieure à 2 bar, de disposer grâce à la compression de l'étape (**f**), d'un gaz à une pression totale comprise entre 40 et 80 bar, correspondant à une pression partielle en CO₂ comprise entre 15 et 40 bar, compatible avec la purification cryogénique. Ces pressions permettront d'utiliser les fluides dans la suite du procédé sans être obligé de recourir à des compressions supplémentaires.

Compte tenu de la teneur moyenne en CO₂ du gaz alimentant la première étape de condensation/séparation, celle-ci peut être réalisée à une température comprise entre -10°C et la température ambiante. La phase gazeuse issue de la séparation étant appauvrie en CO₂, la séparation suivante nécessite une température plus basse ; ainsi, les séparations successives sont réalisées à des températures décroissantes pouvant aller jusqu'à une température de l'ordre de -56°C c'est-à-dire proche de la température du point triple du CO₂. Le procédé peut mettre en oeuvre de une à cinq étapes (hn) de condensation/séparation successives ; de préférence, il mettra en oeuvre deux ou trois étapes (**hn**) successives.

Riche en CO₂, chaque condensat pourra, grâce à des traitements complémentaires appropriés, être utilisé ou séquestré sur site ou à proximité sous forme gazeuse ; il pourra être exporté pour être utilisé ou séquestré sous forme gazeuse ou liquide. Il pourra notamment et de façon particulièrement avantageuse être utilisé dans l'industrie alimentaire, grâce à une purification adaptée.

Le froid récupéré est avantageusement utilisé pour le refroidissement de fluides du procédé en complément des appareils réfrigérants.

Lorsque l'homme du métier n'a pas besoin de produire du dioxyde de carbone pur, Il prévoit ainsi d'éliminer l'eau contenue, puis récupère une partie plus ou moins importante du CO₂ par séparations successives, mais aussi les impuretés lourdes en C²⁺ (c'est-à-dire les molécules organiques contenant 2 carbones ou plus) et une partie du méthane contenue dans le résiduaire du PSA.

Cependant, le procédé est tout particulièrement avantageux lorsqu'il est mis en oeuvre pour optimiser la production d'hydrogène et produire conjointement du dioxyde de carbone de pureté alimentaire.

Il comprend alors, outre les étapes décrites précédemment, au moins:
- une étape d'élimination d'impuretés lourdes préalable à la première étape (**hn**), ainsi que :
- pour au moins une partie des étapes (**hn**), une étape (**i**) d'élimination des impuretés légères contenues dans les condensats correspondants pour l'obtention de CO₂ de qualité alimentaire, cette étape comprenant au moins :
   - une étape (**i1**) de détente du condensat jusqu'à une pression de l'ordre de 5 à 40 bar, de préférence de 10 à 30 bar, et
   - une étape (**i2**) de distillation du condensat détendu pour l'obtention d'une phase liquide constituée de CO₂ purifié de qualité alimentaire, et d'une phase gazeuse contenant lesdites impuretés légères.

Par impuretés lourdes, on entend les hydrocarbures et autres impuretés ayant une tension de vapeur inférieure à celle du CO₂. L'élimination des impuretés lourdes est classiquement réalisée par passage du fluide à purifier sur lit d'adsorbants et/ou sur lit de catalyseurs.

Lors de cette étape d'élimination des impuretés légères (**i**), obtenues par une purification dite cryogénique, le condensat est débarrassé des impuretés légères qu'il contient, et notamment des impuretés légères entraînées lors de l'étape (**hn**).

Cette variante du procédé est ainsi apte à assurer conjointement une production d'hydrogène et de dioxyde de carbone de pureté alimentaire, avec récupération des constituants légers du résiduaire du PSA dans la purge des incondensables.

De préférence, tout ou partie de la phase gazeuse issue de l'étape **(i2)** est réincorporée au niveau de l'étape de compression (**f**).

De façon avantageuse, ladite réincorporation est réalisée via un éjecteur de sorte à contribuer en outre à la compression de l'étape (**f**). En effet, le principe de l'éjecteur est d'utiliser la force motrice d'un gaz à pression élevée pour augmenter la pression d'un gaz de pression plus faible. Dans le cadre de la présente invention, le gaz de plus faible pression sera le plus souvent le résiduaire du PSA, tandis que le gaz à pression élevée sera la phase gazeuse issue de l'étape (**i2**). On peut cependant concevoir aussi le cas où le résiduaire du PSA soit à une pression supérieure à celle de la phase gazeuse issue de l'étape (**i2**) (après avoir subi une première compression par exemple), dans ce cas, c'est lui qui apportera la force motrice au système. On pourra aussi utiliser un autre gaz du procédé présentant une pression suffisante.

Avec ou sans la contribution d'un éjecteur, une partie de la compression pourra provenir de tout type de compresseur : à vis, à piston ou de préférence centrifuge.

De préférence, la dernière des étapes (**hn**) comprend au moins les étapes intermédiaires suivantes :
- une étape de condensation à une température inférieure à - 40°C de tout ou partie du CO₂ contenu dans la phase gazeuse issue de l'étape (**hn-1**),
- une étape de séparation du condensat riche en CO₂ obtenu d'avec la phase gazeuse qui contient les composés incondensables et constitue la purge des incondensables,
- une étape de réchauffage de la purge des incondensables et du condensat liquide détendu à une pression comprise entre 5 et 35 bar à contre-courant de la condensation, et récupération de froid pour refroidir les fluides du procédé.
- une étape de réincorporation au niveau de l'étape de compression (**f**), de la phase riche en CO₂ vaporisée.

Un autre intérêt majeur de l'invention réside dans la valorisation optimisée de la purge des incondensables.

Le recyclage du perméat à l'entrée de l'unité PSA permet d'améliorer le taux global de récupération d'hydrogène. Ainsi, ce taux de récupération H₂ qui est au maximum de l'ordre de 90% dans le cas d'un fonctionnement d'unité PSA classique peut dans le cadre de l'invention passer à 95%, voire plus. De plus, recycler cette fraction riche en hydrogène récupérée dans le résiduaire de l'unité PSA, vers l'entrée de celle-ci diminue d'autant la quantité de gaz résiduaire à recycler ailleurs dans le procédé ou à éliminer.

Contenant essentiellement du méthane et du monoxyde de carbone, le résiduaire de purge utilisé en substitution partielle du mélange d'hydrocarbures de l'étape (**a**) se substitue partiellement au réactif (méthane), et partiellement au produit (syngas), améliorant ainsi le rendement de la réaction de reformage :

CH₄ + H₂O → CO + 3H₂

Par ailleurs, dans le cas d'un reformage non adiabatique, ce recyclage partiel du résiduaire comme charge à reformer permet de réduire la quantité de résiduaire à envoyer aux brûleurs de la chambre de combustion.

Le procédé pourra comporter en outre une étape de pré-reformage du mélange d'hydrocarbures, préalable à l'étape (**a**) de reformage, il pourra aussi comporter préalablement à l'étape de reformage -ou de pré-reformage-, une étape de désulfuration du mélange d'hydrocarbures à reformer ou pré-reformer.

Selon une variante particulièrement avantageuse, le procédé prévoit de stabiliser la composition du résiduaire du PSA en amont des étapes de traitement de celui-ci de telle sorte qu'il présente une teneur en CO₂ stabilisée dans le temps, moins dépendante notamment des variations de composition bien connues liées au fonctionnement normal d'une unité PSA.

C'est ainsi que pour stabiliser à une valeur haute la composition du résiduaire du PSA- correspondant par exemple à la teneur maximale en CO₂ dudit résiduaire du PSA- le procédé comprend avantageusement une étape d'incorporation au niveau de l'étape de compression (**f**) d'une phase gazeuse plus riche en CO₂ que le gaz résiduaire du PSA, provenant d'une capacité tampon alimentée en particulier en la phase condensée -puis vaporisée- issue de la séparation de la dernière des étapes (**hn**), et/ou en la phase gazeuse provenant de l'étape (**i2**), et/ ou en CO₂ gazeux provenant de l'évaporation fatale d'un stockage de CO₂ liquide (ou de toute autre source adaptée à cet usage et disponible sur le site). Ces différentes phases gazeuses sont disponibles à des pressions de l'ordre de 5 bar ou plus.

Cette capacité tampon, alimentée en fluides gazeux à des pressions supérieures à la pression d'entrée du gaz résiduaire du PSA dans l'étape de compression (**f**) permettent de stabiliser la composition de la charge au niveau de ladite étape par réinjections appropriées à l'un des inter-étages du compresseur de charge.

Selon une variante de l'invention, celle-ci concerne un procédé pour la production combinée d'hydrogène et de dioxyde de carbone à partir d'un mélange d'hydrocarbures, tel que défini à la revendication 7.

L'étape de séchage du gaz (**g'**) pourra également être située à un inter-étage des étapes de compression de l'étape (**f'**).

Il est clair que les modes de réalisation préférentiels décrits précédemment dans le cas où on élimine l'eau du résiduaire du PSA, après l'étape de compression, s'appliquent de la même manière, ou de manière équivalente évidente pour l'homme du métier, à ces variantes de procédé. La description de ces modes préférentiels ne sera donc pas reprise ici afin de ne pas alourdir la description. Ces modes préférentiels, appliqués à cette seconde variante doivent cependant être considérés comme faisant partie intégrante de l'invention.

Selon un deuxième aspect de l'invention, celle-ci se rapporte à une installation pour la production combinée d'hydrogène et de dioxyde de carbone à partir d'un mélange d'hydrocarbures, comprenant au moins :
- un module de génération d'un gaz de synthèse contenant au moins du dioxyde de carbone, de l'hydrogène, du monoxyde de carbone, du méthane, et de la vapeur d'eau, à partir d'un mélange d'hydrocarbures ;
- un premier module de refroidissement du gaz de synthèse avec des moyens pour la récupération de la chaleur résiduelle disponible;
- un module de conversion inverse à la vapeur de tout ou partie du gaz de synthèse ;
- un second module de refroidissement du mélange après conversion, avec condensation de la vapeur, par échange de chaleur avec différents circuits d'eau de chaudière et/ou d'eau déminéralisée ;
- une unité de purification par adsorption par modulation de pression (ou PSA) du mélange refroidi quittant le second module de refroidissement pour la production d'hydrogène purifié à une pureté au moins égale à 98% et d'un gaz résiduaire dit « résiduaire du PSA » contenant du dioxyde de carbone ;
- un module de compression apte à comprimer le résiduaire du PSA jusqu'à une pression supérieure à la pression du reformage et telle que la pression partielle du CO₂ contenu soit comprise entre 15 et 40 bar environ ;
- un module de séchage du résiduaire du PSA comprimé par élimination de l'eau contenue pour l'obtention d'un gaz sec ;
- des moyens pour la mise en oeuvre des étapes (**hn**) successives de condensation/séparation selon la revendication 1, comprenant
   - pour chacune des étapes (**hn**), à l'exception de la dernière :
      - un module de condensation/séparation alimenté en gaz provenant de l'étape précédente, équipé de moyens pour la récupération du condensat riche en CO₂ et la récupération de la phase gazeuse contenant les composés incondensables,
      - des moyens pour transporter la phase gazeuse issue de l'étape (**hn-1**) vers l'alimentation du module de condensation/séparation de l'étape suivante,
   - et, pour la dernière étape de condensation/séparation :
      - un module de condensation/séparation alimenté en gaz provenant de l'étape précédente, équipé de moyens pour la récupération du condensat riche en CO₂ et pour la récupération de la phase gazeuse contenant les composés incondensables,
      - des moyens pour recycler la phase gazeuse sortant du module de condensation/séparation de la dernière étape vers le procédé, ou l'envoyer vers l'extérieur.

En particulier, l'installation étant destinée à produire du dioxyde de carbone de pureté alimentaire, elle comprend en outre au moins :
- un module d'élimination des impuretés lourdes situé en amont du premier module de condensation ainsi que,
- pour au moins une partie des étapes (**hn**) :
   - un moyen de détente du condensat, et
   - des moyens de distillation du condensat détendu pour l'obtention en fond de colonne de distillation d'une phase liquide constituée de CO₂ purifié de qualité alimentaire, et en tête de colonne d'une phase gazeuse contenant les impuretés légères.

Selon un mode de réalisation particulier, l'installation comprend pour la mise en oeuvre de la dernière étape (**hn**) :
- des moyens pour condenser à une température inférieure à - 40°C tout ou partie du CO₂ contenu dans la phase gazeuse issue de l'étape (**hn-1**),
- des moyens de séparation du condensat riche en CO₂ obtenu d'avec la phase gazeuse qui contient les composés incondensables et constitue la purge des incondensables,
- un échangeur de chaleur permettant le transfert de chaleur entre la purge des incondensables et le condensat liquide détendu à une pression comprise entre 5 et 35 bar par passage à contre-courant de la condensation, et récupération de froid par échange avec le condensat détendu et la purge des incondensables,
- des moyens de recyclage, de la phase riche en CO₂ vaporisée, au niveau du compresseur.

Selon un mode de réalisation préféré, elle comprend pour le traitement de la purge des incondensables, au moins :
- une unité de perméation alimentée en la purge des incondensables pour la production d'un résiduaire de purge riche en méthane et monoxyde de carbone et d'un perméat enrichi en hydrogène,
- des moyens pour le recyclage d'au moins une partie du perméat à l'entrée de l'unité PSA,
- des moyens pour le recyclage du résiduaire de purge au niveau du module de génération du gaz de synthèse, en substitution partielle du mélange d'hydrocarbures l'alimentant, et/ou comme combustible.

L'invention va maintenant être décrite en se référant aux dessins et exemples ci-après.

Les dessins illustrent des modes de réalisation particuliers du procédé de l'invention.

Il doit être entendu que l'invention ne se limite pas à ces modes de réalisation. L'homme du métier pourra notamment envisager ;
- la combinaison des techniques de traitement et recyclage illustrés dans ces modes de réalisation,
- d'autres techniques de production de gaz de synthèse, tels ceux cités précédemment,
- d'autres utilisations de la purge telles celles citées précédemment.

Les Figures 1 et 2 représentent des diagrammes fonctionnels illustrant des modes de réalisation préférés de l'invention pour la production d'hydrogène et, respectivement, de dioxyde de carbone alimentaire ou de dioxyde de carbone à séquestrer.
La Figure 3 représente schématiquement une installation selon l'invention pour la liquéfaction et la purification du CO₂ contenu dans un résiduaire de PSA d'une installation de production d'hydrogène afin d'obtenir du CO₂ de qualité alimentaire.

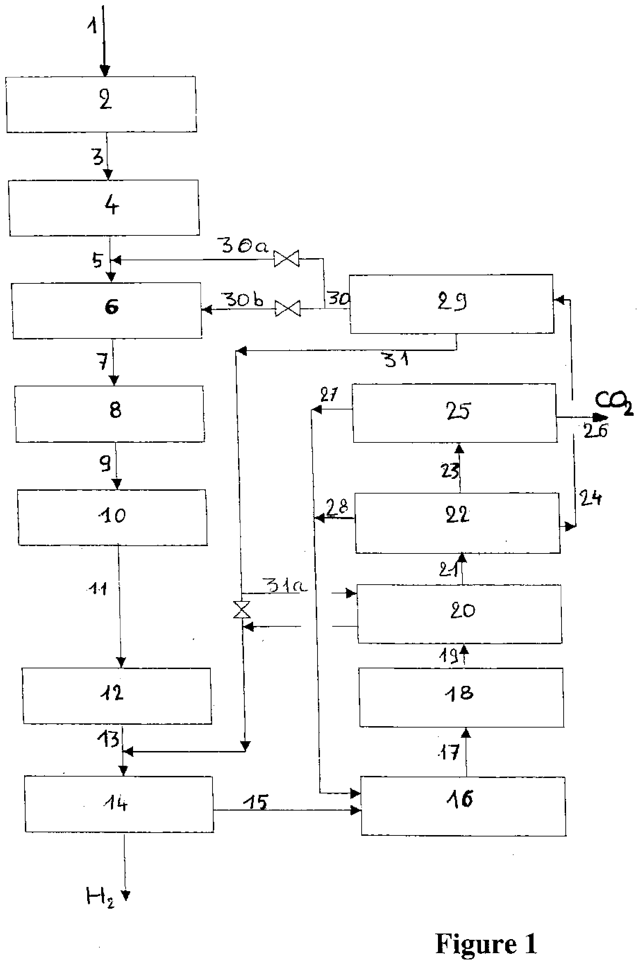

La Figure 1 décrit le schéma fonctionnel d'une installation de production de dioxyde de carbone alimentaire (et d'hydrogène) selon l'invention. La partie de l'installation assurant la production d'hydrogène n'est pas représentée quand elle est distincte de la partie de l'installation conduisant à la production de CO₂.

La charge alimentant le procédé est constituée par un mélange d'hydrocarbures - ici du gaz naturel (GN) - le flux **1** d'hydrocarbures alimente un module de désulfuration **2** .

La charge désulfurée **3** passe alors dans un pré-reformeur **4** ; le mélange pré-reformé **5**, mélange essentiellement constitué de méthane, d'hydrogène, de monoxyde de carbone, de dioxyde de carbone et d'eau alimente le module de reformage **6** qui, via l'étape (**a**) du procédé, produit le gaz de synthèse **7** contenant essentiellement de l'hydrogène, du monoxyde de carbone, du dioxyde de carbone, du méthane et de la vapeur d'eau.

Le gaz de synthèse est refroidi par échange de chaleur, selon l'étape (**b**) du procédé, avec de l'eau de chaudière en **8,** puis le gaz refroidi **9** est traité conformément à l'étape (**c**) du procédé dans un module **10** de conversion inverse, où le CO est converti en H₂ et en CO₂. Le mélange gazeux **11** sortant du module **10** est refroidi dans le module **12**, selon l'étape (**d**) du procédé, avec condensation de la vapeur contenue dans le mélange par échange de chaleur avec différents circuits d'eau de chaudière et/ou d'eau déminéralisée.

Le mélange refroidi **13** est alors traité dans une unité de purification d'hydrogène **14** de type PSA, selon l'étape (**e**) du procédé, pour l'obtention d'un flux gazeux enrichi en hydrogène à une pureté au moins égale à 98% et d'un gaz résiduaire **15** -dit résiduaire du PSA- contenant le dioxyde de carbone. Ce résiduaire du PSA **15** est disponible à une pression de l'ordre de 1 à 3 bar abs, il contient sensiblement tout le CO₂ coproduit lors des étapes de reformage et de conversion inverse. Typiquement, dans le cas de la Figure 1 où le mélange d'hydrocarbures **1** alimentant le procédé est du gaz naturel, la composition moyenne du résiduaire du PSA est proche de: CO₂ : 45% - CO : 12% - H2 : 23% - CH₄ : 17% - H₂O : 1% - N₂ : 2%. En tenant compte des variations de composition liées au cycle de l'unité PSA, la teneur en CO₂ est comprise entre 42 et 48%, la teneur en H₂ varie quant à elle entre 20 et 26% , les teneurs des autres constituants restant à peu près constantes.

Le résiduaire du PSA **15** est ensuite comprimé dans le module de compression **16**, selon l'étape (**f**) du procédé, pour l'obtention d'un résiduaire du PSA comprimé **17.** Il est comprimé à 60 bar environ, ce qui assure une pression partielle de CO₂ de l'ordre de 27 bar.

Le résiduaire de PSA comprimé **17** est d'abord débarrassé de ses impuretés lourdes dans un module **18**, par une succession d'adsorptions régénérables par exemple, on obtient ainsi un résiduaire comprimé purifié **19** qui est ensuite séché, selon l'étape (**g**) de l'invention, dans un module de séchage **20** pour l'obtention d'un résiduaire **21**, comprimé, débarrassé des impuretés lourdes et séché.

Le résiduaire **21** est ensuite refroidi pour être séparé par liquéfaction dans un module de séparation **22,** qui permet d'obtenir un condensat **23** contenant essentiellement du CO₂ liquide et un mélange gazeux 24 contenant une fraction de CO₂ non condensée ainsi que les composés plus légers dits incondensables, selon les étapes (**hn**) de l'invention. Cette séparation est dans le cas de la Figure 1 réalisée en deux étapes.

Le refroidissement du résiduaire **21** est réalisé par circulation à contre-courant des fluides froids issus de la purification cryogénique et par échange de chaleur avec un groupe frigorifique extérieur associé. Le condensat **23** contient essentiellement du CO₂, cependant afin d'obtenir du CO₂ de qualité alimentaire, le condensat **23** est purifié par distillation dans le but de le débarrasser des impuretés légères entraînées dans la phase liquide. Pour cela, le condensat **23** est détendu à 23 bar avant d'alimenter la colonne de distillation **25.** On récupère en bas de colonne une phase liquide **26** constituée de CO₂ de pureté alimentaire, et en tête de colonne une phase gazeuse **27.** Cette phase gazeuse **27** contenant du CO₂ en proportion importante, est recyclée vers le module de compression **16.**

Ainsi qu'il a été rappelé précédemment, la séparation réalisée dans le module **22** s'effectue en 2 étapes. La première séparation est obtenue pour une température de -28°C environ (fonction de la pression partielle de CO₂, elle-même fonction de la pression totale et de la proportion de CO₂ dans le flux **21**). Le mélange gazeux issu de la première séparation est refroidi dans un échangeur de chaleur non représenté, à une température de l'ordre de -50°C à contre-courant des fluides issus à cette température de la deuxième étape de séparation. On sépare ainsi en sortie du second (et dernier) séparateur un autre condensat et le mélange gazeux **24.** Le condensat issu du second séparateur à une température de l'ordre de - 50°C est vaporisé dans l'échangeur de chaleur pour former un courant gazeux **28.** Il est alors incorporé au flux gazeux **27** pour être recyclé vers le module de compression **16.**

Le mélange gazeux **24** obtenu à l'issue de la séparation contient les impuretés légères de la charge **1**; réchauffé à température ambiante dans les échangeurs de chaleur, il constitue la purge des incondensables, disponible sous une pression de 58 bar. La composition de la purge est de l'ordre de : CO₂ : 21% - CO : 18% - H2 : 36% - CH₄ : 24% - N₂ : 1%.

La purge des incondensables **24** est alors traitée dans le module de perméation **29** qui produit un résiduaire de purge **30** enrichi en méthane et en CO disponible à haute pression (56 bar environ), et un perméat **31** enrichi en H₂ à une pression de l'ordre de 25 bar environ.

Le perméat **31** riche en hydrogène est recyclé à l'entrée de l'unité de purification d'hydrogène **14.** Une partie **31a** du perméat est préalablement détournée vers l'unité de séchage **20** pour assurer la régénération des sécheurs, puis réincorporée à la fraction non détournée pour être recyclée vers l'alimentation de l'unité PSA **14.**

Le résiduaire de purge **30** est quant à lui recyclé vers le reformage pour être pour sa partie **30a** ajouté au mélange préreformé **5** alimentant le reformeur **6,** et pour sa partie **30b** utilisé comme combustible dans les brûleurs du reformage.

Les recyclages des mélanges **30a** et **31** permettent de diminuer la quantité de gaz résiduaire **30b** envoyée comme combustible vers le reformage, mais aussi de mieux valoriser les constituants qui les composent. Ainsi, le perméat **31** enrichi en hydrogène est recyclé vers l'entrée de l'unité de purification d'hydrogène **14,** ceci permet d'augmenter, pour une charge initiale **1** donnée, la production en hydrogène, et donc le taux de récupération global H₂ de l'installation. Le mélange **30a** apporte à la charge à reformer **5** une certaine quantité de gaz déjà reformée.

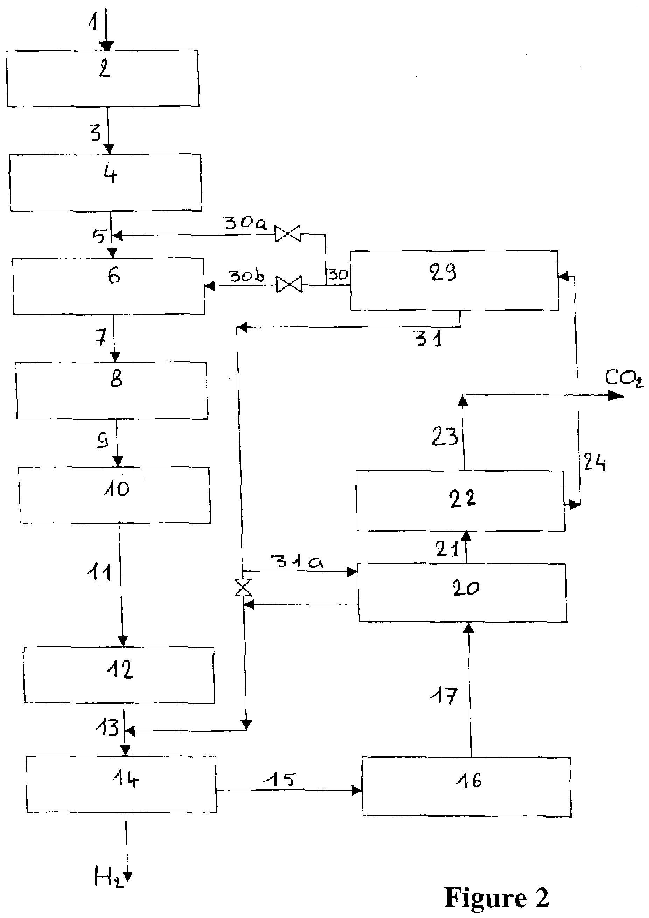

La Figure 2 décrit le schéma fonctionnel d'une installation de production de dioxyde de carbone à séquestrer (et d'hydrogène) selon l'invention. La partie de l'installation correspondant à la production d'hydrogène n'est pas représentée dès lors qu'elle devient distincte de la partie de l'installation correspondant à la production de CO₂.

L'installation représentée ne diffère de celle de la Figure 1 qu'au niveau de la séparation des constituants du résiduaire du PSA.

Les étapes conduisant à l'obtention du résiduaire du PSA comprimé **17** sont identiques à celles de la Figure 1.

Puis, le résiduaire de PSA comprimé **17** est ensuite séché, selon l'étape (**g**) de l'invention dans un module de séchage **20** pour l'obtention d'un résiduaire comprimé et séché **21.** Compte tenu du fait que le dioxyde de carbone n'a pas dans ce cas vocation à être utilisé pur, il est donc inutile de le purifier.

Comme dans le cas de l'obtention de CO₂ alimentaire, le résiduaire **21** est ensuite refroidi pour être séparé par liquéfaction dans un module de séparation **22,** qui permet d'obtenir un condensat **23** contenant essentiellement du CO₂ liquide et un mélange gazeux **24** contenant une fraction de CO₂ non condensée ainsi que les composés plus légers dits incondensables, selon l'étape (**h**) de l'invention.

Le refroidissement du résiduaire **21** est réalisé par circulation à contre-courant des fluides froids et par échange de chaleur avec un groupe frigorifique extérieur associé. Le condensat **23** contient essentiellement du CO₂, il n'y aura pas lieu de le purifier.

La séparation telle que présentée dans la Figure 2 est une séparation en une étape (comme en témoigne l'absence de fluide **28**). Le procédé a pour objet de produire du CO₂, sous forme de CO₂ gazeux sous pression, destiné à être transporté sur un site de stockage par canalisations. Deux alternatives, non représentées sont maintenant décrites pour le traitement du condensat.

Selon la première alternative, le condensat **23** est détendu à une pression de 10 bar environ, revaporisé et surchauffé dans des lignes d'échange jusqu'à la température ambiante. Grâce au froid apporté par cette vaporisation au procédé, l'unité peut fonctionner avec un apport frigorifique extérieur limité, le CO₂ gazeux est disponible sous 10 bar environ en limite d'installation.

Selon une deuxième alternative, le condensat **23** est vaporisé, et réchauffé jusqu'à la température ambiante sous une pression de 58 bar environ. Pour tenir en froid, l'unité doit faire appel à un groupe frigorifique important, le CO₂ gazeux est disponible sous 58 bar environ en limite d'installation.

Une variante du procédé consisterait à produire du CO₂ liquide destiné lui aussi à la séquestration. Dans ce cas, le CO₂ peut être transporté vers le site de stockage par bateau. Cette variante est appropriée pour le stockage souterrain offshore.

Le traitement de la purge des incondensables **24** est identique à ce qu'il est dans le cas de la production de CO₂ alimentaire décrit dans la Figure 1.

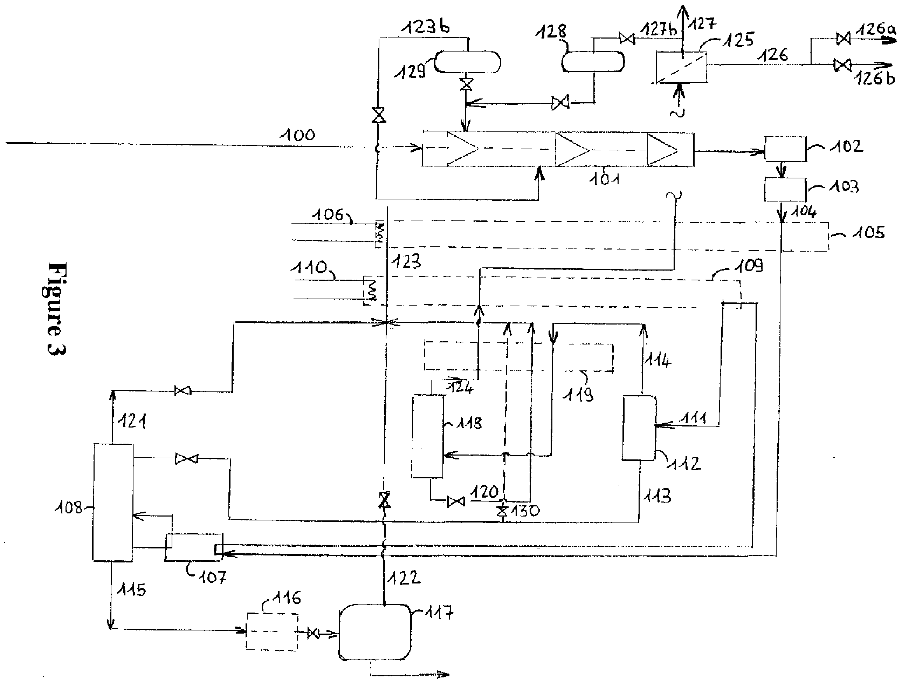

La Figure 3 représente schématiquement la partie d'une installation de production combinée d'hydrogène et de dioxyde de carbone alimentaire qui traite le résiduaire du PSA pour la production de CO₂ liquide de pureté alimentaire par mise en oeuvre d'une variante du procédé de l'invention tel que décrit ci-dessus.

La partie amont de l'installation, non représentée est alimentée en gaz naturel, une unité PSA sépare un flux d'hydrogène, à une pureté supérieure à 98%, du résiduaire de PSA. Ce résiduaire contient l'ensemble du CO₂ coproduit par le reformage à la vapeur et la conversion inverse.

La partie de l'installation schématisée sur la Figure 3 est celle destinée à produire du CO₂ liquide de pureté alimentaire. Pour cela, le résiduaire **100** du PSA est comprimé dans un compresseur de charge **101** multi-étages jusqu'à une pression de l'ordre de 60 bar. Le gaz ainsi comprimé est séparé de l'eau condensée dans un séparateur **102**, puis séché et débarrassé de ses impuretés lourdes par une succession d'adsorptions régénérables en **103.** Le fluide **104** ainsi obtenu se présente alors sous la forme d'un gaz à une pression de l'ordre de 59 bar, sec, débarrassé de ces impuretés lourdes et à une température de l'ordre de 30°C. Il est alors refroidi à contre-courant de fluides issus à cette température de la purification cryogénique dans l'échangeur **105** et par échange de chaleur avec un cycle frigorifique extérieur associé **106** jusqu'à une température de l'ordre de 0°C environ. Puis, il est refroidi en cédant de la chaleur lors de sa liquéfaction partielle dans le rebouilleur **107** de la colonne **108** de distillation du CO₂. Il est ensuite refroidi à contre-courant de fluides issus à cette température de la purification cryogénique dans l'échangeur **109** et par échange de chaleur avec un cycle frigorifique extérieur associé **110** jusqu'à une température de l'ordre de -29°C. On dispose alors d'un fluide **111** à - 29°C et 58 bar environ. A cette température, l'essentiel du CO₂ est liquéfié. Le fluide **111** passe alors dans un premier séparateur **112** où le condensat **113** est séparé de la phase non condensée **114.** Le condensat **113** est détendu via une vanne de détente à une pression de 23 bar pour alimenter la colonne de distillation **108.**

Le CO₂ purifié liquide **115** est récupéré en bas de colonne 108 pour être, après un sous refroidissement en **116** destiné à limiter son évaporation, stocké dans un réservoir **117** de CO₂ liquide puis acheminé vers le client.

La phase non condensée **114**, issue du séparateur **112** à une température de l'ordre de -29°C, est refroidie à nouveau, jusqu'à -51°C, à contre-courant des fluides issus à cette température du deuxième séparateur 118, ces échanges de chaleur contribuant à la ligne d'échange **119.** La phase liquide du séparateur **118** est riche en CO₂, elle est détendue et constitue le fluide **120** à une pression de 12 bar et une température de -55°C revaporisée lors de son réchauffement à -33°C par passage dans la ligne d'échange **119**, elle est mélangée avec la phase gazeuse **121** provenant de la tête de la colonne à distiller **108** à une pression de l'ordre de 23 bar et une température de l'ordre de -30°C, ainsi qu'avec le gaz d'évaporation **122** (dit gaz de « flash ») pour constituer un flux gazeux **123.** Réchauffé à la température ambiante par passages successifs dans les lignes d'échange **109**, puis **105**, ce flux gazeux riche en CO₂ est alors essentiellement recyclé à l'entrée de l'unité de liquéfaction, plus précisément à un étage intermédiaire du compresseur de charge **101** ; une fraction **123b** étant soustraite du flux principal pour alimenter la capacité tampon **129** en une phase gazeuse riche en CO₂.

La phase gazeuse **124** issue du séparateur **118** qui contient les impuretés légères de la charge **100** est réchauffée à température ambiante dans les lignes d'échange **119**, **109**, **105** et constitue la purge des incondensables, disponible sous une pression de 57 bar environ.

Les échangeurs de chaleur (lignes d'échange **119, 109, et 105**) ainsi que les séparateurs **112** et **118** et les lignes de liaison entre eux sont préférentiellement placés dans une boîte froide afin de réduire les pertes de frigories. On pourra également incorporer dans cette boîte froide tout ou partie des équipements suivants ainsi que leurs lignes de liaison associées :
- le(s) cycle(s) frigorifique(s) **106**, **110**;
- le rebouilleur **107**;
- la colonne à distiller **108;**
- le sous refroidisseur **116;**
- le réservoir **117.**

La purge des incondensables **124** est traitée dans l'unité de perméation **125** qui délivre le résiduaire de purge **126** destiné à alimenter le reformage en tant que charge, **126a** et en tant que carburant, **126b.** Le perméat **127** issu de l'unité de perméation **125** est essentiellement recyclé vers l'entrée du PSA, une fraction **127b** étant soustraite du flux principal pour alimenter la capacité tampon **128** en une phase gazeuse pauvre en CO₂. Les capacités tampon **128** et **129** délivrent, en fonction des besoins, un flux plus ou moins riche en CO₂ au niveau du compresseur **101** afin de stabiliser la composition du fluide traité. Au besoin, on peut soustraire via **130** une partie du flux **113** avant détente, le détendre à la pression du flux **123,** le froid ainsi généré apportant du froid supplémentaire à la ligne d'échange **119.**

Le tableau ci-dessous présente les compositions, pressions et températures de différents fluides référencés dans la Figure 3 pour un exemple de mise en oeuvre de l'invention selon la Figure 3.

**Tableau**

| Caractéristiques | Teneurs (% molaires) | | | | | | Pression (bar abs) | Température (° C) |
|---|---|---|---|---|---|---|---|---|
| Références fluide | CO₂ | H₂ | CO | CH₄ | N₂ | H₂O | | |
| **100** | 44,87 | 23,35 | 12,00 | 17,56 | 1,60 | 0,61 | 1,3 | 35 |
| **104** | n.R | n.R | n.R | n.R | n.R | n.R | 59 | 32 |
| **111** | n.R | n.R | n.R | n.R | n.R | n.R | 58 | -29 |
| **113** (après détente) | 92 | 1 | 2 | 5 | (-) | (-) | 23 | -37 |
| **114** (après refroidissement) | n.R | n.R | n.R | n.R | n.R | n.R | 58 | -48 |
| **115** | >99,99995 | (-) | (-) | (-) | (-) | (-) | 22,5 | -16 |
| **120** | 91 | 1 | 2 | 6 | (-) | (-) | 12 | -56 |
| **121** | 69 | 4 | 7 | 20 | (-) | (-) | 12 | -37 |
| **122** | 100 | (-) | (-) | (-) | (-) | (-) | n.R | n.R |
| **124** | 21 | 36 | 18 | 24 | 1 | (-) | 57 | -47 |
| **126b** | 18 | 23 | 24 | 33 | 2 | (-) | 56 | 80 |
| **127** | 26 | 62 | 7 | 5 | (-) | (-) | 26 | 32 |
| (-) : proche de "zéro" | | | | | | | | |
| n.R : non reporté | | | | | | | | |

Les avantages du procédé selon l'invention sont ainsi notamment de :
- Pouvoir augmenter le taux de récupération de l'hydrogène généré par le reformage ou l'oxydation partielle et la conversion. Ainsi, le taux de récupération global de l'hydrogène qui avec une unité PSA est traditionnellement de 90% maximum, est porté à environ 95%, voire plus, par le procédé de l'invention (par taux de récupération de l'hydrogène, on entend hydrogène produit/ hydrogène généré).
- Pouvoir récupérer jusqu'à environ 80% du CO₂ coproduit dans l'unité de production H₂ sans avoir à investir dans une unité de lavage dédiée à cet effet avec une consommation de vapeur importante.
- Pouvoir recycler sous forme de charge tout ou partie de la purge et réduire la quantité de gaz combustible à renvoyer vers l'étape de génération de gaz de synthèse, permettant ainsi d'utiliser des techniques de reformage plus performantes et moins consommatrices de combustible.

Parmi les avantages de l'invention, on notera aussi qu'une seule étape de compression qui porte le résiduaire du PSA d'une pression de l'ordre de 1,3 bar à une pression totale de l'ordre de 40 à 80 bar suffit pour l'ensemble du procédé de purification/séparation cryogénique. On comprime en effet ainsi le résiduaire du PSA à une pression, au moins égale à celle de l'étape (**a**), et telle que la pression partielle en CO₂ soit supérieure à 15 bar. En conséquence, cette pression permet, et le recyclage vers la génération du gaz de synthèse, et la séparation cryogénique du dioxyde de carbone.

Des variantes du procédé de l'invention peuvent être utilisées pour traiter différents types de flux gazeux présentant une teneur en dioxyde de carbone suffisante, typiquement de l'ordre de 15 % ou plus sur base sèche (on peut notamment citer des gaz résiduaires, des fumées), qu'ils soient à haute ou basse pression, secs ou humides. Les étapes de compression (jusqu'à une pression partielle de CO2 comprise entre 15 et 40 bar), de séchage et de condensation/séparation devant dans ce cas être adaptées au gaz à traiter.

## Revendications

1. Procédé pour la production combinée d'hydrogène et de dioxyde de carbone à partir d'un mélange d'hydrocarbures, comportant au moins :
- une étape (**a**) de génération d'un gaz de synthèse contenant au moins du dioxyde de carbone, de l'hydrogène, du monoxyde de carbone, du méthane, et de la vapeur d'eau à partir du dit mélange d'hydrocarbures ;
- une étape (**b**) de refroidissement du gaz de synthèse issu de (**a**) avec récupération de la chaleur résiduelle disponible ;
- une étape (**c**) de conversion inverse à la vapeur de tout ou partie du gaz de synthèse refroidi issu de (**b**) pour oxyder la majeure partie du monoxyde de carbone qu'elle contient en dioxyde de carbone, avec production correspondante d'hydrogène ;
- une étape (**d**) de refroidissement du mélange issu de l'étape (**c**), avec condensation de la vapeur, par échange de chaleur avec différents circuits d'eau de chaudière et/ou d'eau déminéralisée ;
- une étape (**e**) de purification du mélange refroidi issu de (**d**) dans une unité d'adsorption par modulation de pression (ou PSA) permettant l'obtention d'un flux enrichi en hydrogène à une pureté au moins égale à 98% et d'un gaz résiduaire dit « résiduaire du PSA » contenant du dioxyde de carbone, à une pression de l'ordre de 1 à 3 bar abs
ainsi que des étapes de traitement dudit résiduaire du PSA pour l'obtention d'un fluide enrichi en dioxyde de carbone, comportant au moins :
- une étape (**f**) de compression du résiduaire du PSA jusqu'à une pression supérieure à la pression du reformage et telle que la pression partielle du CO₂ contenu soit comprise entre 15 et 40 bar environ ;
- une étape (**g**) de séchage du résiduaire du PSA comprimé par élimination de l'eau contenue pour l'obtention d'un gaz sec ;
- une étape ou plusieurs étapes (**hn**) successives de condensation/séparation, telle(s) que
• chacune des étapes (**hn**) comprend elle-même :
- une étape de condensation de tout ou partie du CO₂ contenu dans le gaz provenant de l'étape précédente, suivie par
- une étape de séparation du condensat riche en CO₂ issu de la séparation d'avec la phase gazeuse contenant les composés incondensables,
• et,
- la ou les étapes (**hn**) sont mises en oeuvre à des températures tn comprises entre la température ambiante et -56°C, avec, pour tout n tn inférieure à tn-1,
- la phase gazeuse issue de l'étape (**hn-1**) alimente l'étape (**hn**), la phase gazeuse issue de la dernière étape (**hn**) constituant la purge des incondensables,
- une étape d'utilisation de la purge des incondensables comprenant elle-même au moins :
• une étape de traitement dans une unité de perméation pour la production d'un résiduaire de purge riche en méthane et monoxyde de carbone, disponible à une pression supérieure à la pression de l'étape (**a**), et d'un perméat enrichi en hydrogène, et éventuellement en dioxyde de carbone à une pression supérieure à la pression de fonctionnement de l'unité PSA de l'étape (**e**), ainsi que
• une étape de recyclage de tout ou partie dudit perméat à l'entrée de l'unité de purification PSA de l'étape (**e**), ainsi que
• une étape de recyclage du résiduaire de purge au niveau de l'étape (**a**), en substitution partielle du mélange d'hydrocarbures, et/ou d'utilisation comme combustible, soit dans la chambre de combustion d'un reformeur non adiabatique, soit dans un four de préchauffage de la charge dans le cas d'un reformage auto-thermique ou d'une oxydation partielle.

2. Procédé selon la revendication 1 **caractérisé en ce que** tout ou partie des condensats issus des étapes (**hn**) sont vaporisés après détente, avec récupération de froid, pour produire du CO₂ sous forme gazeuse sous une pression comprise entre 5 et 40 bar.

3. Procédé selon la revendication 1 ou la revendication 2 pour l'obtention de dioxyde de carbone de pureté alimentaire, **caractérisé en ce qu'**il comprend en outre au moins :
- une étape d'élimination d'impuretés lourdes préalable à la première étape (**hn**) ainsi que :
- pour au moins une partie des étapes (**hn**), une étape (**i**) d'élimination des impuretés légères contenues dans les condensats correspondants pour l'obtention de CO₂ de qualité alimentaire, cette étape comprenant au moins :
• une étape (**i1**) de détente du condensat jusqu'à une pression de l'ordre de 5 à 40 bar, de préférence de 10 à 30 bar, et
• une étape (**i2**) de distillation du condensat détendu pour l'obtention d'une phase liquide constituée de CO₂ purifié de qualité alimentaire, et d'une phase gazeuse contenant lesdites impuretés légères.

4. Procédé selon la revendication 3, **caractérisé en ce que** tout ou partie de la phase gazeuse issue de l'étape (**i2**) est réincorporée au niveau de l'étape de compression (**f**), de préférence via un éjecteur de sorte à contribuer en outre à la compression de l'étape (**f**).

5. Procédé selon l'une des revendications 1 à 4 **caractérisé en ce que** la dernière des étapes (**hn**) comprend au moins les étapes intermédiaires suivantes :
- une étape de condensation à une température inférieure à - 40°C de tout ou partie du CO₂ contenu dans la phase gazeuse issue de l'étape (**hn-1**),
- une étape de séparation du condensat riche en CO₂ obtenu d'avec la phase gazeuse qui contient les composés incondensables et constitue la purge des incondensables,
- une étape de réchauffage de la purge des incondensables et du condensat liquide détendu à une pression comprise entre 5 et 35 bar à contre-courant de la condensation, et récupération de froid pour refroidir les fluides du procédé,
- une étape de réincorporation au niveau de l'étape de compression (**f**), de la phase riche en CO₂ vaporisée.

6. Procédé selon l'une des revendications 1 à 5 **caractérisé en ce qu'**il comprend une étape d'incorporation au niveau de l'étape (**f**) d'une phase gazeuse plus riche en CO₂ que le gaz résiduaire du PSA, provenant d'une capacité tampon alimentée en totalité ou en partie en la phase condensée -puis vaporisée- issue de la séparation de la dernière des étapes (**hn**), et/ou par exemple en la phase gazeuse provenant de l'étape (**i2**), et/ou en CO₂ gazeux provenant de l'évaporation fatale d'un stockage de CO₂ liquide.

7. Procédé pour la production combinée d'hydrogène et de dioxyde de carbone à partir d'un mélange d'hydrocarbures, comportant au moins:
- une étape (**a**) de génération d'un gaz de synthèse contenant au moins du dioxyde de carbone, de l'hydrogène, du monoxyde de carbone, du méthane, et de la vapeur d'eau, à partir du dit mélange d'hydrocarbures;
- une étape (**b**) de refroidissement du gaz de synthèse issu de (**a**) avec récupération de la chaleur résiduelle disponible ;
- une étape (**c**) de conversion inverse à la vapeur de tout ou partie du gaz de synthèse refroidi issu de (**b**) pour oxyder la majeure partie du monoxyde de carbone qu'elle contient en dioxyde de carbone, avec production correspondante d'hydrogène ;
- une étape (**d**) de refroidissement du mélange issu de l'étape (**c**), avec condensation de la vapeur, par échange de chaleur avec différents circuits d'eau de chaudière et/ou d'eau déminéralisée ;
- une étape (**g'**) de séchage du mélange refroidi issu de (**d**) par élimination de l'eau contenue pour l'obtention d'un mélange gazeux sec ;
- une étape (**e'**) de purification du mélange sec issu de (**g'**) dans une unité d'adsorption par modulation de pression (ou PSA) permettant l'obtention d'un flux enrichi en hydrogène à une pureté au moins égale à 98% et d'un gaz résiduaire dit « résiduaire sec du PSA » contenant du dioxyde de carbone, à une pression de l'ordre de 1 à 3 bar abs;
ainsi que des étapes de traitement dudit résiduaire sec du PSA pour l'obtention d'un fluide enrichi en dioxyde de carbone, comportant au moins :
- une étape (**f'**) de compression du résiduaire sec du PSA jusqu'à une pression supérieure à la pression du reformage et telle que la pression partielle du CO₂ contenu soit comprise entre 15 et 40 bar environ ;
- une étape ou plusieurs étapes (**hn**) successives de condensation/séparation, telle(s) que
• chacune des étapes (**hn**) comprend elle-même :
- une étape de condensation de tout ou partie du CO₂ contenu dans le gaz provenant de l'étape précédente, suivie par
- une étape de séparation du condensat riche en CO₂ issu de la séparation d'avec la phase gazeuse contenant les composés incondensables,
• et,
- la ou les étapes (**hn**) sont mises en oeuvre à des températures tn comprises entre la température ambiante et -56°C, avec, pour tout n tn inférieure à tn-1,
- la phase gazeuse issue de l'étape (**hn-1**) alimente l'étape (**hn**), la phase gazeuse issue de la dernière étape (**hn**) constituant la purge des incondensables,
- une étape d'utilisation de la purge des incondensables comprenant elle-même au moins :
• une étape de traitement dans une unité de perméation pour la production d'un résiduaire de purge riche en méthane et monoxyde de carbone, disponible à une pression supérieure à la pression de l'étape (**a**), et d'un perméat enrichi en hydrogène, et éventuellement en dioxyde de carbone à une pression supérieure à la pression de fonctionnement de l'unité PSA de l'étape (**e'**), ainsi que
• une étape de recyclage de tout ou partie dudit perméat à l'entrée de l'unité de purification PSA de l'étape (**e'**), ainsi que
• une étape de recyclage du résiduaire de purge au niveau de l'étape (**a**), en substitution partielle du mélange d'hydrocarbures, et/ou d'utilisation comme combustible, soit dans la chambre de combustion d'un reformeur non adiabatique, soit dans un four de préchauffage de la charge dans le cas d'un reformage auto-thermique ou d'une oxydation partielle.

8. Installation pour la production combinée d'hydrogène et de dioxyde de carbone à partir d'un mélange d'hydrocarbures, comprenant au moins :
- un module de génération d'un gaz de synthèse contenant au moins du dioxyde de carbone, de l'hydrogène, du monoxyde de carbone, du méthane et de la vapeur d'eau ;
- un premier module de refroidissement du gaz de synthèse avec des moyens pour la récupération de la chaleur résiduelle disponible ;
- un module de conversion inverse à la vapeur de tout ou partie du gaz de synthèse ;
- une second module de refroidissement du mélange après conversion, avec condensation de la vapeur, par échange de chaleur avec différents circuits d'eau de chaudière et/ou d'eau déminéralisée ;
- une unité de purification par adsorption par modulation de pression (ou PSA) du mélange refroidi quittant le second module de refroidissement pour la production d'hydrogène purifié à une pureté au moins égale à 98% et d'un gaz résiduaire dit « résiduaire du PSA » contenant du dioxyde de carbone ;
- un module de compression apte à comprimer le résiduaire du PSA jusqu'à une pression supérieure à la pression du reformage et telle que la pression partielle du CO₂ contenu soit comprise entre 15 et 40 bar environ ;
- un module de séchage du résiduaire du PSA comprimé par élimination de l'eau contenue pour l'obtention d'un gaz sec ;
- des moyens pour la mise en oeuvre des étapes (**hn**) successives de condensation/séparation selon la revendication 1, comprenant
• pour chacune des étapes (**hn**), à l'exception de la dernière :
- un module de condensation/séparation alimenté en gaz provenant de l'étape précédente, équipé de moyens pour la récupération du condensa riche en CO₂ et la récupération de la phase gazeuse contenant les composés incondensables,
- des moyens pour transporter la phase gazeuse issue de l'étape **(hn-1)** vers l'alimentation du module de condensation/séparation de l'étape suivante,
• et, pour la dernière étape de condensation/séparation
- un module de condensation/séparation alimenté en gaz provenant de l'étape précédente, équipé de moyens pour la récupération du condensat riche en CO₂ et pour la récupération de la phase gazeuse contenant les composés incondensables,
- des moyens pour le traitement des incondensables comprenant :
- une unité de perméation alimentée en la purge des incondensables pour la production d'un résiduaire de purge riche en méthane et monoxyde de carbone et d'un perméat enrichi en hydrogène,
- des moyens pour le recyclage d'au moins une partie du perméat à l'entrée de l'unité PSA,
- des moyens pour le recyclage du résiduaire de purge au niveau du module de génération du gaz de synthèse en substitution partielle du mélange d'hydrocarbures, et/ou comme combustible.

9. Installation selon la revendication 8 pour l'obtention de dioxyde de carbone de pureté alimentaire, **caractérisé en ce qu'**elle comprend en outre au moins :
- un module d'élimination des impuretés lourdes situé en amont du premier module de condensation ainsi que :
- pour au moins une partie des étapes (**hn**) :
• un moyen de détente du condensat, et
• des moyens de distillation du condensat détendu pour l'obtention en fond de colonne de distillation d'une phase liquide constituée de CO₂ purifié de qualité alimentaire, et en tête de colonne d'une phase gazeuse contenant les impuretés légères.

10. Installation selon l'une des revendications 8 ou 9, **caractérisée en ce qu'**elle comprend pour la mise en oeuvre de la dernière étape (**hn**) :
- des moyens pour condenser à une température inférieure à - 40°C tout ou partie du CO₂ contenu dans la phase gazeuse issue de l'étape (**hn-1**),
- des moyens de séparation du condensat riche en CO₂ obtenu d'avec la phase gazeuse qui contient les composés incondensables et constitue la purge des incondensables,
- un échangeur de chaleur permettant le transfert de chaleur entre la purge des incondensables et le condensat liquide détendu à une pression comprise entre 5 et 35 bar par passage à contre-courant de la condensation, et récupération de froid par échange avec le condensat détendu et la purge des incondensables,
- des moyens de recyclage de la phase riche en CO₂ vaporisée au niveau du compresseur.

## Patentansprüche

1. Verfahren zur kombinierten Produktion von Wasserstoff und von Kohlendioxid, ausgehend von einem Gemisch von Kohlenwasserstoffen, mindestens umfassend:
- einen Schritt (**a**) des Erzeugens eines Synthesegases, enthaltend mindestens Kohlendioxid, Wasserstoff, Kohlenmonoxid, Methan und Wasserdampf, ausgehend von dem Gemisch von Kohlenwasserstoffen;
- einen Schritt (**b**) der Kühlung des Synthesegases aus Schritt (**a**) mit Wiedergewinnung der verfügbaren Restwärme;
- einen Schritt (**c**) der inversen Umwandlung des gesamten gekühlten Synthesegases aus Schritt (**b**) oder eines Teils davon mit Dampf, um den Hauptteil des im Kohlendioxid enthaltenen Kohlenmonoxids zu oxidieren, mit entsprechender Produktion von Wasserstoff;
- einen Schritt (**d**) der Kühlung des Gemischs aus Schritt (**c**), mit Kondensation des Dampfs durch Wärmetausch mit verschiedenen Kesselwasserkreisläufen und/oder entmineralisiertem Wasser;
- einen Schritt (**e**) der Reinigung des gekühlten Gemischs aus (**d**) in einer Adsorptionseinheit durch Druckmodulation (oder PSA), die das Erhalten eines mit Wasserstoff angereicherten Stroms mit einer Reinheit von mindestens gleich 98 % und ein Kohlendioxid enthaltendes Restgas, den "PSA-Rückstand", mit einem Druck in der Größenordnung von 1 bis 3 bar abs, erlaubt
sowie Behandlungsschritte des PSA-Rückstands, zum Erhalten eines mit Kohlendioxid angereicherten Fluids, mindestens umfassend:
- einen Schritt (**f**) der Kompression des PSA-Rückstands bis zu einem Druck oberhalb des Reformierungsdrucks und derart, dass der Partialdruck des enthaltenen CO₂ im Bereich von etwa 15 und 40 bar liegt;
- einen Schritt (**g**) des Trocknens des komprimierten PSA-Rückstands durch Eliminierung des enthaltenen Wassers zum Erhalten eines trockenen Gases;
- einen Schritt oder mehrere aufeinanderfolgende Schritte (**hn**) des Kondensierens/Trennens derart, dass
• jeder der Schritte (**hn**) seinerseits umfasst:
- einen Schritt des Kondensierens des gesamten oder eines Teils des CO₂, enthalten in dem aus dem vorhergehenden Schritt stammenden Gas, gefolgt von
- einem Schritt des Trennens des an CO₂ reichen Kondensats aus der Trennung von der gasförmigen Phase, die die unkondensierbaren Verbindungen enthält,
• und
- der Schritt oder die Schritte (**hn**) bei Temperaturen tn, im Bereich von der Umgebungstemperatur und -56 °C, für jedes n tn kleiner als tn-1, durchgeführt werden,
- die gasförmige Phase aus dem Schritt (**hn-1**) den Schritt (**hn**) speist, wobei die gasförmige Phase aus dem letzten Schritt (**hn**) die Ausschleusung der Unkondensierbaren darstellt,
- einen Verwendungsschritt der Ausschleusung der Unkondensierbaren, der seinerseits mindestens umfasst:
• einen Behandlungsschritt in einer Permeationseinheit zur Produktion eines Ausschleusungsrückstands reich an Methan und Kohlenmonoxid, verfügbar bei einem Druck oberhalb des Drucks von Schritt (**a**), und eines mit Wasserstoff und gegebenenfalls mit Kohlendioxid angereicherten Permeats, bei einem Druck oberhalb des Betriebsdrucks der PSA-Einheit von Schritt (**e**), sowie
• einen Schritt der Rückführung des gesamten Permeats oder eines Teils davon am Eingang der Reinigungs-PSA-Einheit von dem Schritt (**e**), sowie
• einen Schritt der Rückführung des Ausschleusungsrückstands auf Höhe von Schritt (**a**) durch teilweises substituieren des Kohlenwasserstoffgemischs und/oder Verwendung als Brennstoff, entweder in der Brennkammer eines nichtadiabatischen Reformers, oder einem Vorwärmeofen der Charge im Fall einer autothermischen Reformierung oder einer Teiloxidation.

2. Verfahren nach Anspruch 1, **dadurch gekennzeichnet, dass** die gesamten oder ein Teil der Kondensate aus den Schritten (**hn**) nach Entspannung mit Wiedergewinnung der Kälte verdampft werden, um CO₂ in gasförmiger Form unter einem Druck im Bereich von 5 und 40 bar zu produzieren.

3. Verfahren nach Anspruch 1 oder Anspruch 2, zum Erhalten von Kohlendioxid von Einspeisereinheit, **dadurch gekennzeichnet, dass** es des Weiteren mindestens umfasst:
- einen Schritt des Eliminierens von schweren Verunreinigungen vor dem ersten Schritt (**hn**), sowie:
- für mindestens einen Teil der Schritte (**hn**) einen Schritt (**i**) des Eliminierens von in den entsprechenden Kondensaten enthaltenen leichten Verunreinigungen zum Erhalten von CO₂ von Einspeisequalität, wobei dieser Schritt mindestens umfasst:
• einen Schritt des Entspannens **(i1)** des Kondensats bis zu einem Druck in der Größenordnung von 5 bis 40 bar, vorzugsweise von 10 bis 30 bar, und
• einen Schritt des Destillierens (**i2**) des entspannten Kondensats zum Erhalten einer flüssigen Phase, die aus gereinigtem CO₂ von Einspeisequalität besteht, und einer gasförmigen Phase, welche die leichten Verunreinigungen enthält.

4. Verfahren nach Anspruch 3, **dadurch gekennzeichnet, dass** die aus Schritt (**i2**) stammende gasförmige Phase ganz oder zum Teil auf Höhe des Schritts der Kompression (**f**) vorzugsweise durch einen Ejektor zurückgeführt wird, um so des Weiteren zur Kompression von Schritt (**f**) beizutragen.

5. Verfahren nach einem der Ansprüche 1 bis 4, **dadurch gekennzeichnet, dass** der letzte der Schritte (**hn**) mindestens die folgenden Zwischenschritte umfasst:
- einen Schritt der Kondensation, bei einer Temperatur unterhalb von -40 °C, des gesamten oder eines Teils des in der gasförmigen Phase aus Schritt (**hn-1**) enthaltenen CO₂,
- einen Schritt des Trennens des an CO₂ reichen Kondensats, erhalten mit der gasförmigen Phase, die die unkondensierbaren Verbindungen enthält und die die Ausschleusung der Unkondensierbaren darstellt,
- einen Schritt des Wiederaufwärmens der Ausschleusung der Unkondensierbaren und des flüssigen, auf einen Druck im Bereich von 5 und 35 bar entspannten, Kondensats im Gegenstrom zur Kondensation, und Wiedergewinnung von Kälte zum Kühlen der Verfahrensfluide,
- einen Schritt des Zurückführens der verdampften Phase reich an CO₂ auf Höhe des Schritts der Kompression (**f**).

6. Verfahren nach einem der Ansprüche 1 bis 5, **dadurch gekennzeichnet, dass** es auf Höhe von Schritt (**f**) einen Schritt der Inkorporierung einer gasförmigen Phase, die reicher an CO₂ ist als das PSA-Rückstandsgas, das insgesamt oder zum Teil aus einer von der kondensierten -dann verdampften- Phase gespeisten Pufferkapazität aus der Trennung des letzten der Schritten (**hn**) und/oder zum Beispiel aus der aus dem Schritt (**i2**) stammenden gasförmigen Phase und/oder aus gasförmigen CO₂ stammt, das aus der fatalen Verdampfung einer flüssigen CO₂-Lagerung stammt, umfasst.

7. Verfahren zur kombinierten Produktion von Wasserstoff und Kohlendioxid, ausgehend von einem Gemisch von Kohlenwasserstoffen, mindestens umfassend:
- einen Schritt (**a**) des Erzeugens eines Synthesegases, enthaltend mindestens Kohlendioxid, Wasserstoff, Kohlenmonoxid, Methan und Wasserdampf, ausgehend von dem Gemisch von Kohlenwasserstoffen;
- einen Schritt (**b**) der Kühlung des Synthesegases aus Schritt (**a**) mit Wiedergewinnung der verfügbaren Restwärme;
- einen Schritt (**c**) der inversen Umwandlung des gesamten oder eines Teils des gekühlten Synthesegases aus Schritt (**b**) mit Dampf, um den Hauptteil des im Kohlendioxid enthaltenen Kohlenmonoxids zu oxidieren, mit entsprechender Produktion von Wasserstoff;
- einen Schritt (**d**) der Kühlung des Gemischs aus Schritt (**c**), mit Kondensation des Dampfs durch Wärmetausch mit verschiedenen Kesselwasserkreisläufen und/oder entmineralisiertem Wasser;
- einen Schritt (**g'**) des Trocknens des gekühlten Gemischs aus (**d**) durch Eliminierung des enthaltenen Wassers zum Erhalten eines trockenen Gasgemischs;
- einen Schritt (**e'**) des Reinigens des trockenen Gemischs aus (**g'**) in einer Adsorptionseinheit durch Druckmodulation (oder PSA), der das Erhalten eines mit Wasserstoff angereicherten Stroms mit einer Reinheit von mindestens gleich 98 % und eines Rückstandsgases des "trockenen PSA-Rückstands", enthaltend Kohlendioxid bei einem Druck in der Größenordnung von 1 bis 3 bar abs, erlaubt;
sowie Schritte der Behandlung des trockenen PSA-Rückstands zum Erhalten eines mit Kohlendioxid angereicherten Fluids, umfassend mindestens:
- einen Schritt (**f'**) des Komprimierens des trockenen PSA-Rückstands bis zu einem Druck oberhalb eines Reformierungsdrucks und derart, dass der Partialdruck des enthaltenen CO₂ im Bereich von etwa 15 bis 40 liegt;
- einen Schritt oder mehrere aufeinanderfolgende Schritte (**hn**) des Kondensierens/Trennens derart, dass
• jeder der Schritte (**hn**) seinerseits umfasst:
- einen Schritt des Kondensierens des gesamten oder eines Teils aus dem vorhergehenden Schritt stammenden CO₂, gefolgt von
- einem Schritt des Trennens des an CO² reichen Kondensats aus der Trennung der gasförmigen Phase, die die unkondensierbaren Verbindungen enthält,
• und
- der Schritt oder die Schritte (**hn**) bei Temperaturen tn, im Bereich von Umgebungstemperatur und -56 °C, für jedes n tn kleiner als tn-1, durchgeführt werden,
- die gasförmige Phase aus Schritt (**hn-1**) den Schritt (**hn**) speist, wobei die gasförmige Phase aus dem letzten Schritt (**hn**) die Ausschleusung von Unkondensierbaren darstellt,
- einen Verwendungsschritt der Ausschleusung der Unkondensierbaren, der seinerseits mindestens umfasst:
• einen Schritt der Behandlung in einer Permeationseinheit zur Produktion eines Ausschleusungsrückstands reich an Methan und Kohlenmonoxid, verfügbar bei einem Druck oberhalb des Drucks von Schritt (**a**), und eines mit Wasserstoff und gegebenenfalls mit Kohlendioxid bei einem Druck über dem Betriebsdruck der PSA-Einheit von Schritt (**e'**) angereicherten Permeats, sowie
• einen Schritt der Rückführung des gesamten oder eines Teils des Permeats am Eingang der Reinigungs-PSA-Einheit von dem Schritt (**e'**), sowie
• einen Schritt der Rückführung des Ausschleusungsrückstands auf Höhe von Schritt (**a**), durch teilweise Substitution des Kohlenwasserstoffgemischs und/oder Verwendung als Brennstoff, entweder in der Brennkammer eines nichtadiabatischen Reformers, oder einem Vorwärmeofen der Charge im Fall einer autothermischen Reformierung oder einer Teiloxidation.

8. Aufbau zur kombinierten Produktion von Wasserstoff und Kohlendioxid, ausgehend von einem Gemisch von Kohlenwasserstoffen, mindestens umfassend:
- ein Modul der Erzeugung eines Synthesegases, enthaltend mindestens Kohlendioxid, Wasserstoff, Kohlenmonoxid, Methan und Wasserdampf;
- ein erstes Modul der Kühlung des Synthesegases mit Mitteln zur Wiedergewinnung der verfügbaren Restwärme;
- ein Modul der inversen Umwandlung des gesamten Synthesegases oder eines Teils davon mit Dampf;
- ein zweites Modul der Kühlung des Gemischs nach Umwandlung, mit Kondensation des Dampfs durch Wärmetausch mit verschiedenen Kesselwasserkreisläufen und/oder entmineralisiertem Wasser;
- eine Einheit zur Reinigung durch Adsorption durch Druckmodulation (oder PSA) des gekühlten Gemischs, das das zweite Modul der Kühlung verlässt, zur Produktion von gereinigtem Wasserstoff mit einer Reinheit von mindestens gleich 98 % und eines Rückstandsgases, dem "PSA-Rückstand", enthaltend Kohlendioxid;
- ein Modul der Kompression, das in der Lage ist, den PSA-Rückstand auf einen Druck oberhalb eines Reformierungsdrucks und derart, dass der Partialdruck des enthaltenen CO₂ im Bereich von etwa 15 bis 40 bar liegt, zu komprimieren;
- ein Modul des Trocknens des komprimierten PSA-Rückstands durch Eliminierung des enthaltenen Wassers zum Erhalten eines trockenen Gases;
- Mittel zum Durchführen der aufeinanderfolgenden Schritte (**hn**) der Kondensation/Trennung nach Anspruch 1, umfassend
• für jeden der Schritte (**hn**) mit Ausnahme des letzten:
- ein Modul der Kondensation/Trennung, gespeist mit aus dem vorhergehenden Schritt stammendem Gas, ausgestattet mit Mitteln zur Wiedergewinnung des an CO₂ reichen Kondensats und der Wiedergewinnung der gasförmigen Phase, die die unkondensierbaren Verbindungen enthält,
- Mittel zum Transportieren der gasförmigen Phase aus Schritt (**hn-1**) zur Einspeisung des Moduls der Kondensation/Trennung des folgenden Schritts,
• und, für den letzten Schritt der Kondensation/Trennung
- ein Modul der Kondensation/Trennung, gespeist mit aus dem vorhergehenden Schritt stammendem Gas, ausgestattet mit Mitteln zur Wiedergewinnung des an CO₂ reichen Kondensats und zur Wiedergewinnung der gasförmigen Phase, die die unkondensierbaren Verbindungen enthält,
- Mitteln zur Behandlung der Unkondensierbaren, umfassend:
- eine mit der Ausschleusung der Unkondensierbaren gespeiste Permeationseinheit zur Produktion eines Ausschleusungsrückstands reich an Methan und Kohlenmonoxid und ein mit Wasserstoff angereichertes Permeat,
- Mittel der Rückführung vom mindestens einem Teil des Permeats am Eingang der PSA-Einheit,
- Mittel der Rückführung des Ausschleusungsrückstands auf Höhe des Moduls der Synthesegaserzeugung durch teilweise Substitution des Kohlenwasserstoffgemischs und/oder als Brennstoff.

9. Aufbau nach Anspruch 8, zum Erhalten von Kohlendioxid von Einspeisereinheit, **dadurch gekennzeichnet, dass** es des Weiteren mindestens umfasst:
- ein Modul der Eliminierung schwerer Verunreinigungen, das sich dem ersten Modul der Kondensation vorgelagert befindet, sowie:
- für mindestens einen Teil der Schritte (**hn**):
• ein Mittel zum Entspannen des Kondensats, und
• Mitteln zur Destillation des entspannten Kondensats zum Erhalten einer flüssigen, aus CO₂ bestehenden Phase am Boden der Destillationskolonne, auf Einspeisequalität gereinigt, und einer gasförmigen Phase, die die leichten Verunreinigungen enthält, am Kolonnenkopf.

10. Aufbau nach einem der Ansprüche 8 oder 9, **dadurch gekennzeichnet, dass** er zum Durchführen des letzten Schritts (**hn**) umfasst:
- Mittel zum Kondensieren, bei einer Temperatur unterhalb von -40 °C, des gesamten oder eines Teils des in der gasförmigen Phase aus Schritt (**hn-1**) enthaltenen CO₂,
- Mittel zur Trennung des an CO₂ reichen Kondensats, erhalten mit der gasförmigen Phase, die die unkondensierbaren Verbindungen enthält und die die Ausschleusung von Unkondensierbaren darstellt,
- einen Wärmetauscher, der den Übergang von Wärme zwischen der Ausschleusung von Unkondensierbaren und dem flüssigen Kondensat, entspannt auf einen Druck im Bereich von 5 und 35 bar durch Passieren im Gegenstrom zur Kondensation, und Wiedergewinnung der Kälte durch Austausch mit dem entspannten Kondensat und der Ausschleusung der Unkondensierbaren, erlaubt,
- Mittel zum Rückführen der Phase reich an verdampften CO₂ auf Höhe des Kompressors.

## Claims

1. Method for the combined production of hydrogen and carbon dioxide from a mixture of hydrocarbons, comprising at least:
- a step (a) of generating a synthesis gas containing at least carbon dioxide, hydrogen, carbon monoxide, methane and steam from said mixture of hydrocarbons;
- a step (b) of cooling the synthesis gas issuing from (a) with recovery of the residual heat available;
- a step (c) of reverse conversion with steam of all or part of the cooled synthesis gas issuing from (b) in order to oxidise the major part of the carbon monoxide that it contains into carbon dioxide, with the corresponding production of hydrogen;
- a step (d) of cooling the mixture issuing from step (c), with condensation of the steam, by exchange of heat with various boiler-water and/or demineralised-water circuits;
- a step (e) of purification of the cooled mixture issuing from (d) in a pressure modulation adsorption (or PSA) unit making it possible to obtain a flow enriched with hydrogen at a purity of at least 98% and a residual gas known as "PSA residual" containing carbon dioxide, at a pressure of around 1 to 3 bar absolute;
as well as steps of treatment of said PSA residual in order to obtain a fluid enriched with carbon dioxide, comprising at least:
- a step (f) of compression of the PSA residual to a pressure greater than the reforming pressure and such that the partial pressure of the CO₂ contained is between approximately 15 and 40 bar;
- a step (g) of drying of the compressed PSA residual by elimination of the water contained for obtaining a dry gas;
- a step or a plurality of successive condensation/separation steps (hn), such that
• each of the steps (hn) itself comprises:
- a step of condensation of all or part of the CO₂ contained in the gas coming from the previous step, followed by
- a step of separation of the condensate rich in CO₂ issuing from the separation from the gaseous phase containing the non-condensable compounds,
• and
- the step or steps (hn) are implemented at temperatures tn lying between ambient temperature and -56°C with, for any n tn less than tn-1,
- the gaseous phase issuing from step (hn-1) supplies step (hn), the gaseous phase issuing from the last step (hn) constituting the purging of the non-condensables,
- a step of use of the non-condensable purge itself comprising at least:
• a step of treatment in a permeation unit for producing a purge residual rich in methane and carbon monoxide, available at a pressure higher than the pressure of step (a), and a permeate rich in hydrogen, and optionally carbon dioxide at a pressure higher than the operating pressure of the PSA unit of step (e), as well as
• a step of recycling all or part of said permeate at the inlet of the PSA purification unit of step (e), as well as
• a step of recycling the purge residual at step (a), in partial substitution for the hydrocarbon mixture, and/or use as a fuel, either in the combustion chamber of a non-adiabatic reformer, or in a furnace for preheating the charge in the case of autothermal reforming or partial oxidation.

2. Method according to claim 1, **characterised in that** all or part of the condensates issuing from steps (hn) are vaporised after pressure reduction, with recovery of cold, in order to produce CO₂ in gaseous form at a pressure of between 5 and 40 bar.

3. Method according to claim 1 or claim 2 for obtaining food-purity carbon dioxide, **characterised in that** it further comprises at least:
- a step of elimination of heavy impurities prior to the first step (hn), as well as:
- for at least some of steps (hn), a step (i) of elimination of the light impurities contained in the corresponding condensates for obtaining food-quality CO₂, this step comprising at least:
-- a step (i1) of expanding the condensate to a pressure of around 5 to 40 bar, preferably 10 to 30 bar, and
-- a step (i2) of distillation of the expanded condensate for obtaining a liquid phase consisting of food-quality purified CO₂, and a gaseous phase containing said light impurities.

4. Method according to claim 3, **characterised in that** all or part of the gaseous phase issuing from step (i2) is reincorporated at the compression step (f), preferably via an ejector so as further to contribute to the compression of step (f).

5. Method according to any of claims 1 to 4, **characterised in that** the last of steps (hn) comprises at least the following intermediate steps:
- a step of condensation at a temperature below -40°C of all or part of the CO₂ contained in the gaseous phase issuing from step (hn-1),
- a step of separation of the condensate rich in CO₂ obtained with the gaseous phase that contains the non-condensable compounds and constitutes the purge of the non-condensables,
- a step of reheating of the purge of the non-condensables and of the liquid condensate expanded at a pressure of between 5 and 35 bar in a flow opposite to the condensation, and recovery of cold in order to cool the fluids of the process,
- a step of reincorporation, at the compression step (f), of the phase rich in vaporised CO₂.

6. Method according to any of claims 1 to 5, **characterised in that** it comprises a step of incorporation, at step (f), of a gaseous phase richer in CO₂ than the PSA residual gas, coming from a buffer storage supplied wholly or partly with the condensed - and then vaporised - phase issuing from the separation of the last of steps (hn), and/or for example with the gaseous phase coming from step (i2), and/or with gaseous CO₂ coming from the inevitable evaporation of a storage of liquid CO₂.

7. Method for the combined production of hydrogen and carbon dioxide from a mixture of hydrocarbons, comprising at least:
- a step (a) of generating a synthesis gas containing at least carbon dioxide, hydrogen, carbon monoxide, methane and steam from said mixture of hydrocarbons;
- a step (b) of cooling the synthesis gas issuing from (a) with recovery of the residual heat available;
- a step (c) of reverse conversion with steam of all or part of the cooled synthesis gas issuing from (b) in order to oxidise the major part of the carbon monoxide that it contains into carbon dioxide, with the corresponding production of hydrogen;
- a step (d) of cooling the mixture issuing from step (c), with condensation of the steam, by exchange of heat with various boiler-water and/or demineralised-water circuits;
- a step (g') of drying the cooled mixture issuing from (d) by elimination of the water contained for obtaining a dry gaseous mixture;
- a step (e') of purification of the dry mixture issuing from (g') in a pressure modulation adsorption (or PSA) unit making it possible to obtain a stream enriched with hydrogen at a purity of at least 98% and a residual gas referred to as "PSA dry residual" containing carbon dioxide, at a pressure of around 1 to 3 bar absolute;
as well as steps of treatment of said PSA residual in order to obtain a fluid enriched with carbon dioxide, comprising at least:
- a step (f') of compression of the PSA residual to a pressure greater than the reforming pressure and such that the partial pressure of the CO₂ contained is between approximately 15 and 40 bar;
- a step or a plurality of successive condensation/separation steps (hn), such that
• each of the steps (hn) itself comprises:
- a step of condensation of all or part of the CO₂ contained in the gas coming from the previous step, followed by
- a step of separation of the condensate rich in CO₂ issuing from the separation from the gaseous phase containing the non-condensable compounds,
• and
- the step or steps (hn) are implemented at temperatures tn lying between ambient temperature and -56°C with, for any n tn less than tn-1,
- the gaseous phase issuing from step (hn-1) supplies step (hn), the gaseous phase issuing from the last step (hn) constituting the purge of the non-condensables,
- a step of use of the non-condensable purge itself comprising at least:
• a step of treatment in a permeation unit for producing a purge residual rich in methane and carbon monoxide, available at a pressure higher than the pressure of step (a), and a permeate rich in hydrogen, and optionally carbon dioxide at a pressure higher than the operating pressure of the PSA unit of step (e'), as well as
• a step of recycling all or part of said permeate at the inlet of the PSA purification unit of step (e), and
• a step of recycling the purge residual at step (a), in partial substitution for the hydrocarbon mixture, and/or use as a fuel, either in the combustion chamber of a non-adiabatic reformer, or in a furnace for preheating the charge in the case of autothermal reforming or partial oxidation.

8. Installation for the combined production of hydrogen and carbon dioxide from a mixture of hydrocarbons, comprising at least:
- a module for generating a synthesis gas containing at least carbon dioxide, hydrogen, carbon monoxide, methane and steam;
- a first module for cooling the synthesis gas with means for recovery of the residual heat available;
- a module for reverse conversion with steam of all or part of the cooled synthesis gas;
- a second module for cooling the mixture after conversion, with condensation of the steam, by exchange of heat with various boiler-water and/or demineralised-water circuits;
- a unit for purification by pressure modulation adsorption (or PSA) of the cooled mixture leaving the second cooling module for producing a purified hydrogen at a purity of at least 98% and a residual gas known as "PSA residual" containing carbon dioxide;
- a compression module able to compress the PSA residual to a pressure greater than the reforming pressure and such that the partial pressure of the CO₂ contained is between approximately 15 and 40 bar;
- a module for drying the compressed PSA residual by elimination of the water contained for obtaining a dry gas;
- means for implementing the successive condensation/separation steps (hn) according to claim 1, comprising
• for each of steps (hn) with the exception of the last:
- a condensation/separation module supplied with gas coming from the previous step, equipped with means for recovering the condensate rich in CO₂ and recovering the gaseous phase containing the non-condensable compounds,
- means for transporting the gaseous phase issuing from step (hn-1) to the supply to the condensation/separation module of the following step,
• and, for the last condensation/separation step
- a condensation/separation module supplied with gas coming from the previous step, equipped with means for recovering the condensate rich in CO₂ and for recovering the gaseous phase containing the non-condensable compounds,
- means for processing the non-condensables, comprising:
- a permeation unit supplied with the purge of the non-condensables for producing a purge residual rich in methane and carbon monoxide and a permeate enriched with hydrogen,
- means for recycling at least part of the permeate at the inlet of the PSA unit,
- means for recycling the purge residual at the module for generating the synthesis gas in partial substitution for the hydrocarbon mixture, and/or as a fuel.

9. Installation according to claim 8 for obtaining carbon dioxide of food purity, **characterised in that** it further comprises at least:
- a module for eliminating the heavy impurities situated upstream of the first condensation module, as well as:
- for at least some of steps (hn):
• a means for expanding the condensate, and
• means for distilling the expanded condensate for obtaining at the bottom of the distillation column a liquid phase consisting of food-quality purified CO₂ and at the column head a gaseous phase containing the light impurities.

10. Installation according to either claim 8 or claim 9, **characterised in that** it comprises, for implementing the last step (hn):
- means for condensing, at a temperature below -40°C, all or some of the CO₂ contained in the gaseous phase issuing from step (hn-1),
- means for separating the condensate rich in CO₂ obtained from the gaseous phase that contains the non-condensable compounds and constitutes the non-condensable purge,
- a heat exchanger for transferring heat between the non-condensable purge and the liquid condensate expanded at a pressure between 5 and 35 bar by passing in a flow opposite to the condensation, and the recovery of cold by exchange with the expanded condensate and the non-condensable purge,
- means for recycling the vaporised phase rich in CO₂ at the compressor.
